# EUROPEAN PATENT SPECIFICATION

(11) **EP 1 529 588 B1**
(45) Date of publication and mention of the grant of the patent: **14.04.2010**
(21) Application number: 04256970.7
(22) Date of filing: 10.11.2004
(51) Int. Cl.: B23H 3/02

(54) **Electrochemical machining tool assembly**
Werkzeuganordnung zum elektrochemischen Bearbeiten
Outil pour usinage par électrochimie

(30) Priority: 10.11.2003 US 706472
(43) Date of publication of application: 11.05.2005
(73) Proprietor: GENERAL ELECTRIC COMPANY, Schenectady, NY 12345 (US)
(72) Inventor: Batzinger, Thomas James, Burnt Hills, New York 12027 (US); Lamphere, Michael Scott, Hookset, New Hampshire 03106 (US); Wei, Bin, Mechanicville, New York 12118 (US); Filkins, Robert John, Niskayuna, New York 12309 (US); Wei, Li, Mill Creek, Washington 98012 (US); Rogenski, Thomas Walter, Rutland, Vermont 056701 (US); Lester, Carl Stephen, Porters Corner, New York 12859 (US)
(74) Representative: Gray, Thomas

(56) References cited:
- US-A- 5 672 263
- US-B1- 6 355 156

## Description

The invention relates generally to electrochemical machining and, more particularly, to monitoring interelectrode gap size and workpiece thickness during electrochemical machining operations.

Electrochemical machining (ECM) is a commonly used method of machining electrically conductive workpieces with one or more electrically conductive tools. During machining, a tool is located relative to the workpiece, such that a gap is defined therebetween. The gap is filled with a pressurized, flowing, aqueous electrolyte, such as a sodium nitrate aqueous solution. A direct current electrical potential is established between the tool and the workpiece to cause controlled deplating of the electrically conductive workpiece. The deplating action takes place in an electrolytic cell formed by the negatively charged electrode (cathode) and the positively charged workpiece (anode) separated by the flowing electrolyte. The deplated material is removed from the gap by the flowing electrolyte, which also removes heat formed by the chemical reaction. The anodic workpiece generally assumes a contour that matches that of the cathodic tool.

For a given tooling geometry, dimensional accuracy of the workpiece is primarily determined by the gap distribution. The gap size should be maintained at a proper range. Too small a gap, such as less than 100 micrometers in a standard ECM operation, could lead to arcing or short-circuiting between the tool and the workpiece. Too large a gap could lead to excessive gap variation, as well as reduction in the machining rate. Monitoring and controlling the gap size between the tool and the workpiece, or directly monitoring the workpiece thickness, is thus important for ECM tolerance control. For example, in machining a turbine compressor blade, the blade thickness should be directly measured during machining, so that a desired thickness can be obtained.

Lack of suitable means for sensing gap size or workpiece thickness may hinder ECM accuracy control. Without such means, many rounds of costly trial-and-error experiments must be run to obtain the gap size changes that occur during the machining process. Gap size can change significantly during the machining process, partly because conductivity of the electrolyte may change in the gap due to heating or gas bubble generation on the tool surface. Variation and inaccuracy in tool feed rate and tool positioning can also contribute to changes in gap size and workpiece thickness. In-process gap detection or workpiece thickness detection is thus important for improving ECM process control.

Recently, an approach for the in-situ measurement of gap size and workpiece thickness has been proposed for ECM process control. In this approach, an ultrasonic sensor is embedded in the ECM tool, and the gap size and workpiece thickness are obtained from ultrasonic time-of-flight measurements. The sensor generates an ultrasonic wave that propagates through the tooling, through the electrolyte in the gap and then through the workpiece. The sensor will receive reflections from the surface of the tool, the front side of the workpiece, and the back side of the workpiece. By comparing the time at which each of these reflected signals is received, the gap size and workpiece thickness can be determined.

However, during conventional ECM operations with a continuous DC voltage, gas bubbles are constantly generated at the cathode, which significantly attenuate the ultrasonic signal propagation through the electrolyte when the ECM voltage exceeds a certain level. Generally speaking, the higher the electrolyte flow rate/inlet pressure, the higher the ECM voltage level may be, while still allowing the ultrasonic measurements to function properly. For example, for an inlet pressure of 150 psi for machining a two square inch sample, the permissible ECM voltage level is about eight volts (8V). However, ECM voltages are typically in a range of about twelve to about twenty volts (12-20V). In commonly assigned, copending US Patent Application No. 09/818,874, entitled "Electrochemical Machining Tool Assembly and Method of Monitoring Electrochemical Machining," it is suggested that the voltage power supply be reduced or regulated to minimize gas bubble generation. Similarly, in commonly assigned, US Patent No. 6,355,156, Li et al, entitled "Method of Monitoring Electrochemical Machining Process and Tool Assembly Therefor," which document discloses in combination the features of the preamble of claim 1 it is suggested that the DC power supply may be turned off for a brief period of time, such as for the time interval used in pulsed electrochemical machining, so as to minimize the generation of gas bubbles for more accurate measurements. However, adjusting the ECM voltage could potentially compromise ECM machining quality.

Accordingly, it would be desirable to reduce gas bubble generation to improve ultrasonic monitoring of ECM machining operations without compromising ECM machining quality.

In accordance with the invention, an electrochemical machining tool assembly as described in claim 1 is provided. The electrochemical machining tool assembly includes at least one electrode adapted to machine a workpiece across a gap upon application of a potential difference ΔV across the electrode and the workpiece, means for flowing an electrolyte through the gap and for flushing the electrolyte from the gap, means for feeding the electrode toward the workpiece, and at least one ultrasonic sensor adapted to direct an ultrasonic wave toward a surface of the electrode and to receive a reflected ultrasonic wave from the surface of electrode. The reflected ultrasonic wave includes a number of reflected waves from the surface of the electrode and from a surface of the workpiece. The electrochemical machining tool assembly further includes a delay generator adapted to delay the excitation of the ultrasonic sensor a dwell time T_{d} after a reduction of the potential difference ΔV across the electrode and the workpiece occurs.

The invention will now be described in greater detail, by way of example, with reference to the drawings, in which:-
FIG. 1 illustrates an electrochemical machining tool assembly embodiment of the invention;
FIG. 2 is a sectional view of the electrochemical machining tool assembly of FIG. 1;
FIG. 3 is an exemplary ultrasonic measurement timing diagram for the electrochemical machining tool assembly of FIGS. 1 and 2; and
FIG. 4 is an exemplary measurement system block diagram of an electrochemical tool assembly embodiment of the invention employing one electrode.

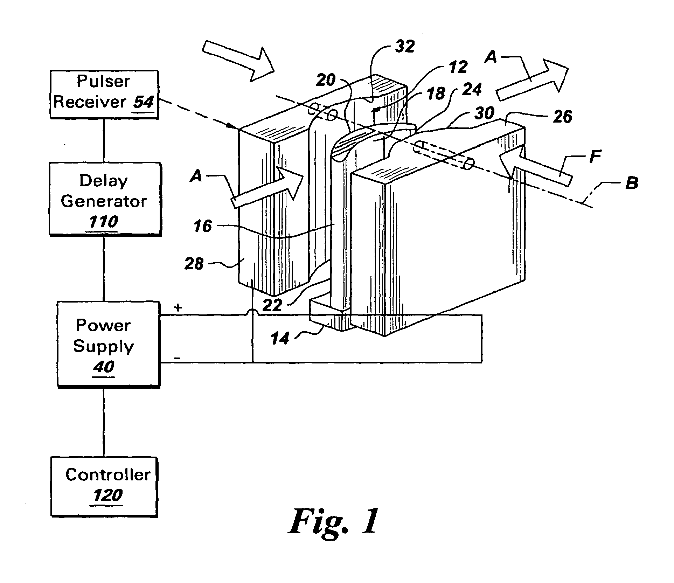

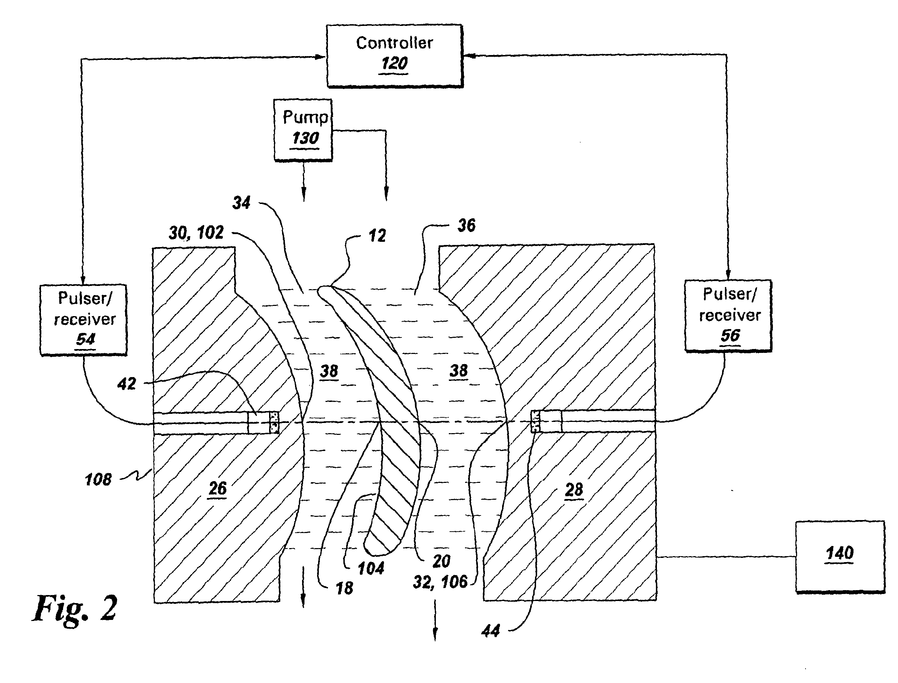

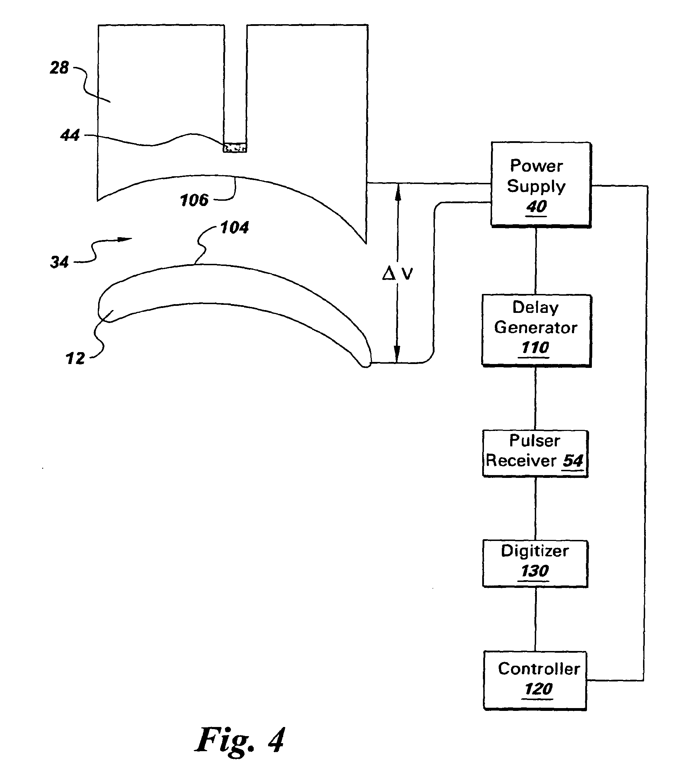

An electrochemical machining tool assembly 10 embodiment of the invention is described with reference to FIGS. 1-4. As shown in FIGS. 1 and 4, the electrochemical machining (ECM) tool assembly 10 includes at least one electrode 26 adapted to machine a workpiece 12 across a gap 34 upon application of a potential difference ΔV across the electrode 26 and the workpiece. For the example shown in FIG. 1, the workpiece 12 is a rotor blade with a shank portion 14 and an airfoil portion 16. The airfoil 16 has a concave pressure side 18 and a convex suction side 20 joined together at a leading edge 22 and a trailing edge 24. This rotor blade example is purely exemplary, and the ECM tool assembly 10 is equally applicable to other workpieces as well. For the example shown in FIG. 4, the ECM tool assembly 10 has one electrode 26. For the example shown in FIG. 1, the ECM tool assembly 10 includes two electrodes 26, 28 arranged on opposite sides of the workpiece 12. The electrodes 26, 28 are shaped to electrochemically machine the workpiece 12 into the desired shape. Each of the electrodes 26, 28 defines a respective gap 34, 36 with respect to the workpiece 12. For the example shown in FIG. 1, the first electrode 26 has a convex machining surface 30 facing the workpiece 12, and the second electrode 28 has a concave machining surface 32 facing the workpiece 12. Depending on the workpiece 12 being machined, the ECM tool assembly 10 may have more or less electrodes than the example shown in FIG. 2.

The ECM tool assembly 10 also includes means for flowing an electrolyte 38 through the gap 34 and for flushing the electrolyte from the gap 34, for example, as indicated by arrows A in FIG. 1. For the example of FIGS. 1 and 2, the electrolyte flows through and is flushed from gaps 34, 36 in the direction of arrows A. Means for flowing and flushing the electrolyte 38 are known and one example is a pump system 130, which is indicated schematically in FIG. 2. It should be noted that Arrows A indicate only one possible fluid flow direction for the ECM tool assembly 10. Also, to contain the electrolyte 38, the electrode(s) 26 and workpiece 12 may be disposed in a receptacle (not shown) filled with the electrolyte 38.

The ECM tool assembly 10 also includes means for feeding the at least one electrode 26 toward the workpiece 12. For the example shown in FIGS. 1 and 2, the two electrodes 26, 28 are mounted on opposite sides of the workpiece 12, to be movable toward and away from the workpiece 12 along the direction indicated by arrows F. Means for moving the electrode 26 are well known and one example is a typical servo drive system 140 that uses an AC servo motor to drive a ball screw mechanism to move the electrode, which is schematically indicated in FIG. 2. Movement of the electrode 26 may be controlled by a motion controller in response to feedback data and/or by an operator.

As indicated in FIG. 2, the ECM tool assembly 10 also includes at least one ultrasonic sensor 42, for example an ultrasonic transducer 42, which is adapted to direct an ultrasonic wave toward a surface 102 of the electrode and to receive a reflected ultrasonic wave from the surface of electrode. The reflected ultrasonic wave comprises a number of reflected waves from the surface 102 of the electrode 26 and from a surface 104 of the workpiece 12. For the example of FIG. 2, the sensor 42 is embedded in the electrode 26. Alternatively, the sensor 42 may be positioned on or near an exterior surface of the electrode 26, for example on or near exterior surface 108 of the electrode 26. As indicated in FIG.1, for example, the ECM tool assembly 10 also includes a delay generator 110, which is adapted to delay the excitation of ultrasonic sensor a dwell time T_{d} after a reduction of the potential difference □V across the electrode 26 and the workpiece 12 occurs. An exemplary dwell time T_{d} is in a range of about seven milliseconds (7 ms) to about 15 milliseconds (15 ms). For one embodiment, the delay generator 110 is adapted to adjust the dwell time T_{d}, for example to shorten or lengthen the dwell time T_{d}. Beneficially, by delaying the excitation of the ultrasonic sensor 42 by a dwell time T_{d}, excitation of the ultrasonic sensor 42 may be synchronized to the machining cycle, such that the ultrasonic sensor is used during machining off-times, that is during portions of the machining cycle in which the machining potential across the electrode 26 and workpiece 12 is either off or reduced. This helps clear the bubbles and reduce electromagnetic interference with the measurement.

As noted above, reducing the ECM voltage may impair ECM machining quality. Accordingly, it is desirable to complete the voltage adjustment in a short time period, to avoid compromising ECM machining quality. Under typical ECM conditions, the gas bubbles are flushed away in less than about fifteen milliseconds (15 ms). More particularly, the gas bubbles are flushed away in about seven to fifteen milliseconds (7-15 ms). Generally, the higher the electrolyte rate flow, the faster the bubbles are flushed. Moreover, the ultrasonic measurement itself takes only a short time, typically on the order of less than about fifty microseconds (50 □s). Under these conditions, the ultrasonic measurement cycle, which includes the above-noted delay for the electrolyte to wash away the gas bubbles, as well as the actual ultrasonic measurement time window, may be relatively short, for example less than about twenty milliseconds (20 ms), during which time the voltage level is reduced, such that the ultrasonic signals are not significantly attenuated. Beneficially, because this period is relatively short, ECM machining quality is not compromised. Moreover, because of the delay, adequate flushing of the bubbles occurs, permitting relatively clean ultrasonic measurements.

According to a more particular embodiment, the ECM tool assembly 10 also includes a power supply 40, which is adapted to energize the electrode 26 for machining by applying a potential difference ΔV across the electrode 26 and the workpiece 12. For the example of FIG. 1, the electrodes 26, 28 are connected to the negative terminal of the power supply 40 to function as cathodes, and the workpiece 12 is connected to the positive terminal of the power supply 40, to function as an anode. In this manner, a potential difference □V is established between the workpiece 12 and the electrodes 26, 28, thereby causing controlled deplating of the workpiece sides 18, 20, to machine the workpiece 12 to its desired shape. The flow of electrolyte 38 through the gaps 34, 36 removes the depleted material, thereby preventing it from being deposited on the electrodes 26, 28. For the particular embodiment of FIG. 2, at least one pulser-receiver 54 is connected to a respective one of the ultrasonic sensors 42. Each of the pulser-receivers 54 is adapted to excite the respective ultrasonic sensor 42 and to receive the respective reflected ultrasonic wave. Each of the pulser-receivers is further adapted to be triggered by the delay generator 110 to excite the respective ultrasonic sensor 42 after a dwell time T_{d} after the occurrence of a reduction of the potential difference ΔV across the electrode 26, 28 and the workpiece 12. The timing is discussed in greater detail below.

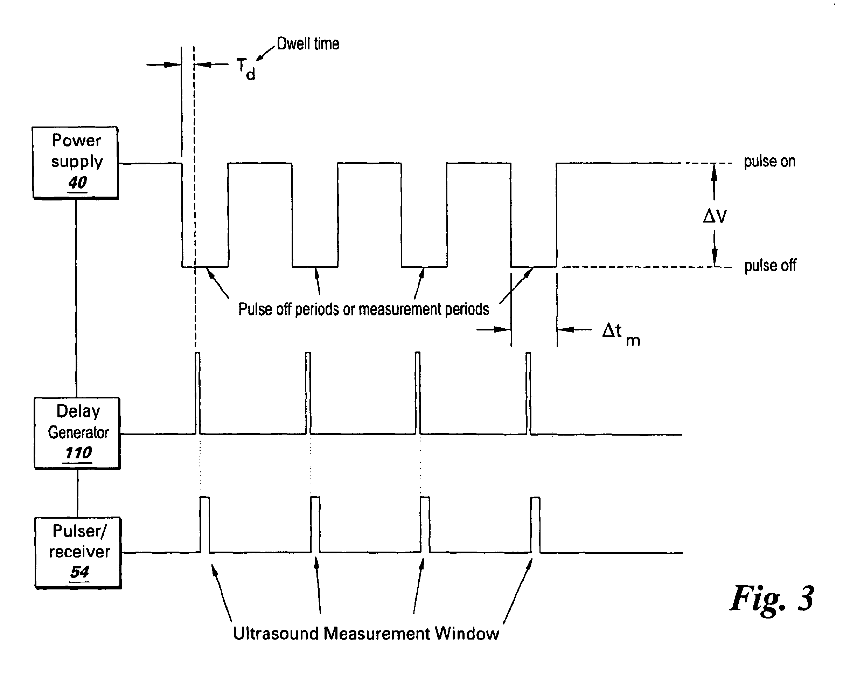

For the particular embodiment of FIG. 1, the delay generator 110 is adapted to monitor the output from power supply 40. The power supply may be configured to supply a number of pulses to generate the potential difference ΔV between the electrode 26 and the workpiece 12. Alternatively, the power supply 40 may be a DC power supply. For the pulsed power supply 40 embodiment, the power supply 40 is adapted to supply pulses during a number of pulse-on periods, and the delay generator 110 is adapted to delay the excitation of the ultrasonic sensor 42 for the dwell time T_{d} after a transition from the pulse-on state to a pulse-off state, as shown for example in FIG. 3. For the DC power supply 40 embodiment, the electrochemical machining tool assembly further includes a controller 120 (see FIG. 1) that is adapted to repeatedly reduce the potential difference ΔV applied across the electrode 26 and the workpiece 12 to generate a series of measurement periods Δt_{M}, as indicated, for example, in FIG. 3. For this latter DC power supply 40 embodiment, the delay generator 110 is adapted to delay the excitation of the ultrasonic sensor 42 for the dwell time T_{d} after a start of one of the measurement periods Δt_{M}, as indicated in FIG. 3.

For the particular embodiment of FIG. 2, the electrochemical machining tool assembly 10 includes a controller 120 that is adapted to generate a set of monitoring data by analyzing the reflected ultrasonic wave to determine at least one of (a) a size of the gap 34 between the electrode 26 and the workpiece 12 and (b) a thickness of the workpiece 12. More particularly, the controller 120 is further adapted to control at least one of (a) the means for feeding the electrode 26 toward the workpiece 12 and (b) the power supply 40, in response to the monitoring data. In other words, the controller is adapted to use the monitoring data in a feedback loop to control the advancement and feed-rate of the electrode 26 relative to the workpiece 12. The term "controller," as that term is used herein, is intended to denote any machine capable of performing the calculations or computations and control operations necessary to perform the tasks of the invention. The phrase "adapted to" as used herein means that the controller is equipped with a combination of hardware and software for performing the tasks of the invention, as will be understood by those skilled in the art.

A method of monitoring machining in the electrochemical machining tool assembly 10 is also described with reference to FIGS. 1-4. The monitoring method includes exciting at least one ultrasonic sensor 42 to direct an ultrasonic wave toward a surface 102 of the electrode. As indicated, for example in FIG. 3, the ultrasonic sensor 42 may be excited by pulsing the sensor 42, for example using a pulser/receiver 54. The monitoring method further includes receiving a reflected ultrasonic wave from the surface 102 of the electrode 26 using the ultrasonic sensor 26. The reflected ultrasonic wave comprises a number of reflected waves from the surface of the electrode 26 and from the surface 104 of the workpiece 12. The monitoring method further includes delaying the excitation of the ultrasonic sensor 42 a dwell time T_{d} after a reduction of the potential difference ΔV across the electrode 26 and the workpiece 12 occurs, as indicated in FIG. 3, for example.

According to a more particular embodiment, the monitoring method further includes analyzing the reflected ultrasonic wave to determine at least one of (a) a size of the gap 34 between the electrode 26 and the workpiece 12 and (b) the thickness of the workpiece 12. Because the acoustic velocities of the two materials are known, the gap 34 and workpiece thickness can be calculated. As noted above, by monitoring the size of the gap 34 and/or the thickness of the workpiece 12 during the machining process, this data can be used in a feedback loop to control the advancement and/or feed-rate of the electrode 26 relative to the workpiece 12.

According to one embodiment, the electrochemical machining tool assembly 10 is a pulsed electrochemical machining tool assembly, and the electrode 26 is energized by a periodic application of a potential difference ΔV between the electrode and the workpiece 12 during a number of pulse-on periods. For this embodiment, the excitation of the ultrasonic sensor 42 is delayed for the dwell time T_{d} after a transition from the pulse-on state to a pulse-off state, as indicated in FIG. 3. For another embodiment, the electrochemical machining tool assembly 10 is a continuous electrochemical machining tool assembly, for example employing a DC power supply 40. For this latter embodiment, the monitoring method further includes repeatedly reducing the potential difference ΔV across the electrode 26 and the workpiece 12 to generate a series of measurement periods Δt_{M}, as is also shown in FIG. 3. For this latter continuous embodiment, the excitation of the ultrasonic sensor 42 is delayed a dwell time T_{d} after a start of one of the measurement periods Δt_{M}, as indicated in FIG. 3.

According to a particular embodiment, the monitoring method further includes adjusting the dwell time T_{d}. For example, the dwell time T_{d} may be decreased, in order to accommodate a shorter pulse off-time (or shorter measurement period Δt_{M}) to facilitate higher frequency ECM pulse excitation. The dwell time T_{d} may also be increased, in order to lengthen the deactivation/flush time. By increasing the delay, the bubbles generated during machining can be more completely flushed away, in order to reduce attenuation of the ultrasonic signals.

As noted above with respect to FIG. 2, for certain embodiments the electrochemical machining tool assembly 10 includes at least two electrodes 26, 28, each of the electrodes being arranged across a respective gap 34, 36 from the workpiece 12. For the embodiment of FIG. 2, a first ultrasonic sensor 42 is excited to direct an ultrasonic wave toward a surface 102 of one of the electrodes 26, and a second ultrasonic sensor 44 is excited to direct an ultrasonic wave toward a surface 106 of another of the electrodes 28. For this two-electrode embodiment, reflected ultrasonic waves are received from the surface 102, 106 of each of the respective electrodes 26, 28 using the respective ultrasonic sensors 42, 44, and the excitation of each of the ultrasonic sensors 42, 44 is delayed for at least the dwell time T_{d} after the occurrence of a reduction of the potential difference ΔV across the electrodes 26, 28 and the workpiece 12. More particularly, for colinear ultrasonic sensors 42, 44, excitation of one of the ultrasonic sensors 42, 44 may be delayed by the dwell time T_{d} after the occurrence of a reduction of the potential difference ΔV across the electrodes 26, 28 and the workpiece 12, while excitation of the other of the ultrasonic sensors 42, 44 may be delayed by the dwell time plus an offset (T_{d} + δ) after the occurrence of a reduction of the potential difference ΔV across the electrodes 26, 28 and the workpiece 12. The offset δ is greater than or equal to the time required to attenuate the ultrasound from the first excited ultrasonic sensor 42, 44.

A method of monitoring machining in a pulsed electrochemical machining (ECM) tool assembly 10 is also described with reference to FIGS. 1-4. As noted above, for a pulsed ECM tool assembly 10, the electrode 26 is periodically energized by application of a number of pulses, as indicated for example in FIG. 3. For this embodiment, the method includes exciting (for example, pulsing) at least one ultrasonic sensor 42 to direct an ultrasonic wave toward a surface 102 of the electrode, receiving a reflected ultrasonic wave from the surface of the electrode using the ultrasonic sensor, the reflected ultrasonic wave comprising a number of reflected waves from the surface of the electrode and from the surface 104 of the workpiece, and delaying the excitation of the ultrasonic sensor 42 a dwell time T_{d} after a transition from a pulse-on state to a pulse-off state. The method may further include adjusting the dwell time T_{d}.

An electrochemical machining (ECM) method for machining a workpiece 12 is described with reference to FIGS. 1-4. This ECM method is equally applicable to ECM tool assemblies 10 having one or multiple electrodes 26, 28. The ECM method includes energizing at least one electrode 26 positioned in proximity to the workpiece 12, the electrode 26 and the workpiece 12 being separated by a gap 34, for example by a gap 34 of about one hundred microns (100 µm) to about two millimeters (2 mm) but not touching. The ECM method further includes flowing an electrolyte 38 through the gap. The electrolyte 38 may be continuously pressurized at about twenty to about two hundred (20-200) psi and flowed using a pump 130, as indicated in FIG. 1, for example. The ECM method further includes flushing the electrolyte from the gap 34. In this manner, the dissolved metal, heat and gas bubbles are removed from the gap 34. The ECM method further includes feeding the electrode 26 toward the workpiece 12, to maintain a desired gap, and monitoring at least one of the gap 34 and the workpiece 12 using the ultrasonic sensor 42. The monitoring includes exciting the ultrasonic sensor 42 to direct an ultrasonic wave toward a surface 102 of the electrode 26, receiving a reflected ultrasonic wave from the surface 102 of the electrode 26 using the ultrasonic sensor 42. As noted above, the reflected ultrasonic wave comprises a number of reflected waves from the surface of the electrode and from the surface 104 of the workpiece 12. The monitoring further includes delaying the excitation of the ultrasonic sensor 42 a dwell time T_{d} after a reduction of the potential difference ΔV across the electrode 26 and the workpiece 12 occurs. Beneficially, by delaying the excitation of the ultrasonic sensor 42 by a dwell time T_{d}, the monitoring may be synchronized such that the monitoring is performed during machining off-times, that is during portions of the machining cycle in which the machining potential across the electrode 26 and workpiece 12 is either off or reduced. This helps clear the bubbles and reduce electromagnetic interference with the measurement. According to a more particular embodiment, the monitoring further includes adjusting the dwell time T_{d}, for example shortening or lengthening the dwell time T_{d}.

According to a particular embodiment, the monitoring further includes generating monitoring data by analyzing the reflected ultrasonic wave to determine at least one of (a) a size of the gap 34 between the electrode 26 and the workpiece 12 and (b) a thickness of the workpiece 12. More particularly, the method further includes controlling at least one of (a) energizing and (b) feeding the electrode in response to the monitoring data. As discussed above, the monitoring data may be used in a feedback loop to control the advancement and/or feed-rate of the electrode 26.

For one embodiment, the ECM tool assembly 10 is a pulsed ECM tool assembly 10. For this embodiment, a potential difference ΔV is periodically applied between the electrode 26 and the workpiece 12 during a number of pulse-on periods, and the excitation of the ultrasonic sensor 42 is delayed by the dwell time T_{d} after a transition from the pulse-on state to a pulse-off state.

For another embodiment, the ECM tool assembly 10 is a continuous ECM tool assembly 10. For this embodiment, the method further includes repeatedly reducing the potential difference ΔV across the electrode 26 and the workpiece 12 to generate a series of measurement periods Δt_{M}, and the excitation of the ultrasonic sensor 42 is delayed by the dwell time T_{d} after a start of one of the measurement periods Δt_{M}.

## Claims

1. An electrochemical machining tool assembly (10) comprising:
at least one electrode (26) adapted to machine a workpiece (12) across a gap (34) upon application of a potential difference ΔV across said electrode and the workpiece;
means for flowing an electrolyte (38) through the gap and for flushing the electrolyte from the gap;
means for feeding said at least one electrode toward the workpiece;
at least one ultrasonic sensor (42) adapted to direct an ultrasonic wave toward a surface (102) of said electrode and to receive a reflected ultrasonic wave from the surface of said electrode, the reflected ultrasonic wave comprising a plurality of reflected waves from the surface of said electrode and from a surface (104) of the workpiece;
**characterised by**
a delay generator (110) adapted to delay the excitation of said ultrasonic sensor a dwell time T_{d} after a reduction of the potential difference ΔV across said electrode and the workpiece occurs.

2. The electrochemical machining tool assembly (10) of Claim 1, further comprising:
a power supply (40) adapted to energize said at least one electrode (26) for machining by applying the potential difference ΔV across said at least one electrode and the workpiece (12); and
at least one pulser-receiver (54) connected to a respective one of said at least one ultrasonic sensors, each of said at least one pulser-receivers being adapted to excite the respective ultrasonic sensor and to receive the respective reflected ultrasonic wave, each of said at least one pulser-receivers being further adapted to be triggered by said delay generator (110) to excite the respective ultrasonic sensor after the dwell time T_{d} after a reduction of the potential difference ΔV across said electrode and the workpiece occurs.

3. The electrochemical machining tool assembly (10) of Claim 2, wherein said delay generator (110) is adapted to monitor the output from said power supply (40).

4. The electrochemical machining tool assembly (10) of Claim 2, wherein said power supply (40) is adapted to supply a plurality of pulses to generate the potential difference ΔV between said at least one electrode (26) and the workpiece (12) during a plurality of pulse-on periods, and wherein said delay generator (110) is adapted to delay the excitation of said at least one ultrasonic sensor (42) the dwell time T_{d} after a transition from the pulse-on state to a pulse-off state.

5. The electrochemical machining tool assembly (10) of Claim 2, wherein said power supply (40) is a DC power supply adapted to apply the potential difference ΔV across said at least one electrode (26) and the workpiece (12), said electrochemical machining tool assembly further comprising a controller (120) adapted to repeatedly reduce the potential difference ΔV applied across said at least one electrode and the workpiece to generate a series of measurement periods Δt_{M}, wherein said delay generator (110) is adapted to delay the excitation of said ultrasonic sensor (42) the dwell time T_{d} after a start of one of the measurement periods Δt_{M}.

6. The electrochemical machining tool assembly (10) of Claim 2, wherein the dwell time T_{d} is in a range of about seven milliseconds (7 ms) to about 15 milliseconds (15 ms).

7. The electrochemical machining tool assembly (10) of Claim 2, wherein said delay generator (110) is adapted to adjust the dwell time T_{d}.

8. The electrochemical machining tool assembly (10) of Claim 2, further comprising a controller (120), said controller being adapted to generate a plurality of monitoring data by analyzing the reflected ultrasonic wave to determine at least one of (a) a size of the gap (34) between said electrode (26) and the workpiece (12) and (b) a thickness of the workpiece.

9. The electrochemical machining tool assembly (10) of Claim 8, wherein said controller (120) is further adapted to control at least one of (a) said means for feeding said at least one electrode (26) toward the workpiece (12) and (b) said power supply (40), in response to the monitoring data.

10. The electrochemical machining tool assembly (10) of Claim 2, wherein each of said at least one ultrasonic sensors (42) comprises an ultrasonic transducer.

## Patentansprüche

1. Werkzeuganordnung (10) zum elektrochemischen Bearbeiten, aufweisend:
wenigstens eine Elektrode (26), die zum Bearbeiten eines Werkstückes (12) über einen Spalt (34) nach Anlegen einer Potentialdifferenz ΔV über der Elektrode und dem Werkstück angepasst ist;
eine Einrichtung, um einen Elektrolyten (38) durch den Spalt strömen zu lassen und um den Elektrolyten aus dem Spalt zu spülen;
eine Einrichtung zum Zustellen der wenigstens einen Elektrode auf das Werkstück;
wenigstens einen Ultraschallsensor (42), der dafür angepasst ist, eine Ultraschallwelle auf eine Oberfläche (102) der Elektrode zu richten und eine reflektierte Ultraschallwelle von der Oberfläche der Elektrode zu empfangen, wobei die reflektierte Ultraschallwelle mehrere reflektierte Wellen von der Oberfläche der Elektrode und von einer Oberfläche (104) des Werkstückes aufweist;
**gekennzeichnet durch**:
einen Verzögerungsgenerator (110), der dafür angepasst ist, die Erregung des Ultraschallsensors um eine Haltezeit T_{d} zu verzögern, nachdem eine Verringerung der Potentialdifferenz AV über der Elektrode und dem Werkstück erfolgt.

2. Werkzeuganordnung (10) zum elektrochemischen Bearbeiten nach Anspruch 1, ferner aufweisend:
eine Energieversorgung (40), die dafür angepasst ist, die wenigstens eine Elektrode (26) zum Bearbeiten mit Energie zu versorgen, indem eine Potentialdifferenz ΔV über der wenigstens einen Elektrode und dem Werkstück (12) angelegt wird; und
wenigstens einen Impulssender-Empfänger (54), der mit einem entsprechenden von den wenigstens einen Ultraschallsensoren verbunden ist, wobei jeder von den wenigstens einen Impulssender/Empfängen dafür angepasst ist, den entsprechenden Ultraschallsensor zu erregen und die entsprechende reflektierte Ultraschallwelle zu empfangen, wobei jeder von den wenigstens einen Impulssender-Empfängern für eine Auslösung durch den Verzögerungsgenerator (110) angepasst ist, um den entsprechenden Ultraschallsensor nach der Haltezeit T_{d} zu erregen, nachdem eine Verringerung der Potentialdifferenz ΔV über der Elektrode und dem Werkstück erfolgt.

3. Werkzeuganordnung (10) zum elektrochemischen Bearbeiten nach Anspruch 2, wobei der Verzögerungsgenerator (110) dafür angepasst ist, das Ausgangssignal aus der Energieversorgung (40) zu überwachen.

4. Werkzeuganordnung (10) zum elektrochemischen Bearbeiten nach Anspruch 2, wobei die Energieversorgung (40) dafür angepasst ist, mehrere Impulse zu liefern, um die Potentialdifferenz ΔV zwischen der wenigstens einen Elektrode (26) und dem Werkstück (12) während mehrerer Impuls-Ein-Perioden zu erzeugen, und wobei der Verzögerungsgenerator (110) dafür angepasst ist, die Erregung des wenigstens einen Ultraschallsensors (42) um die Haltezeit T_{d} nach einem Übergang von dem Impuls-Ein-Zustand in einen Impuls-Aus-Zustand zu verzögern.

5. Werkzeuganordnung (10) zum elektrochemischen Bearbeiten nach Anspruch 2, wobei die Energieversorgung (40) eine Gleichstrom-Energieversorgung ist, die dafür angepasst ist, die Potentialdifferenz ΔV über der wenigstens einen Elektrode (26) und dem Werkstück (12) anzulegen, wobei die Werkzeuganordnung für die elektrochemische Bearbeitung ferner eine Steuerung (120) aufweist, die dafür angepasst ist, wiederholt die über der wenigstens einen Elektrode und dem Werkstück angelegte Potentialdifferenz ΔV zu verringern, um eine Serie von Messperioden Δt_{M} zu erzeugen, wobei der Verzögerungsgenerator (110) dafür angepasst ist, die Erregung des Ultraschallsensors (42) um die Haltezeit T_{d} nach einem Beginn von einer der Messperioden Δt_{M} zu verzögern.

6. Werkzeuganordnung (10) zum elektrochemischen Bearbeiten nach Anspruch 2, wobei die Haltezeit T_{d} in einem Bereich von etwa 7 Millisekunden (7 ms) bis etwa 15 Millisekunden (15 ms) liegt.

7. Werkzeuganordnung (10) zum elektrochemischen Bearbeiten nach Anspruch 2, wobei der Verzögerungsgenerator (110) dafür angepasst ist, die Haltezeit T_{d} einzustellen.

8. Werkzeuganordnung (10) zum elektrochemischen Bearbeiten nach Anspruch 2, die ferner eine Steuerung (120) aufweist, wobei die Steuerung dafür angepasst ist, mehrere Überwachungsdaten durch Analysieren der reflektierten Ultraschallwelle zu erzeugen, um wenigstens eines von (a) einer Größe des Spaltes (34) zwischen der Elektrode (26) und dem Werkstück (12) und (b) einer Dicke des Werkstückes zu bestimmen.

9. Werkzeuganordnung (10) zum elektrochemischen Bearbeiten nach Anspruch 8, wobei die Steuerung (120) ferner dafür angepasst ist, wenigstens eine von (a) der Einrichtung zum Zustellen der wenigstens einen Elektrode (26) zu dem Werkstück (12) und (b) der Energieversorgung (40) in Reaktion auf die Überwachungsdaten zu steuern.

10. Werkzeuganordnung (10) zum elektrochemischen Bearbeiten nach Anspruch 2, wobei jeder von den wenigstens einen Ultraschallsensoren (42) einen Ultraschallwandler aufweist.

## Revendications

1. Ensemble d'outil pour usinage électrochimique (10) comprenant :
au moins une électrode (26) adaptée pour usiner une pièce (12) placée dans un espace (34) lors de l'application d'une différence de potentiel ΔV entre ladite électrode et la pièce ;
un moyen pour faire circuler un électrolyte (38) dans l'espace et pour évacuer l'électrolyte dudit espace ;
un moyen pour faire avancer ladite au moins une électrode vers la pièce ;
au moins un capteur à ultrasons (42) adapté pour diriger une onde ultrasonore vers une surface (102) de ladite électrode et pour recevoir une onde ultrasonore réfléchie par la surface de ladite électrode, l'onde ultrasonore réfléchie comprenant une pluralité d'ondes réfléchies par la surface de ladite électrode et par une surface (104) de la pièce ;
**caractérisé par** un générateur de retard (110) adapté pour retarder l'excitation dudit capteur à ultrasons pendant un temps de maintien T_{d} après une réduction de la différence de potentiel AV entre ladite électrode et la pièce.

2. Ensemble d'outil pour usinage électrochimique (10) selon la revendication 1, comprenant en outre :
une alimentation électrique (40) adaptée pour exciter ladite au moins une électrode (26) pour l'usinage en appliquant la différence de potentiel ΔV entre ladite au moins une électrode et la pièce (12) ; et
au moins un générateur d'impulsions-récepteur (54) connecté à un capteur respectif parmi lesdits au moins un capteur à ultrasons, chacun desdits au moins un générateur d'impulsions-récepteur étant adapé pour exciter le capteur à ultrasons respectif et pour recevoir l'onde ultrasonore réfléchie respective, chacun desdits au moins un générateur d'impulsions-récepteur étant en outre adapté pour être déclenché par ledit générateur de retard (110) pour exciter le capteur ultrasonore respectif après le temps de maintien T_{d} après une réduction de la différence de potentiel ΔV entre ladite électrode et la pièce.

3. Ensemble d'outil pour usinage électrochimique (10) selon la revendication 2, dans lequel ledit générateur de retard (110) est adapté pour surveiller la sortie de ladite alimentation (40).

4. Ensemble d'outil pour usinage électrochimique (10) selon la revendication 2, dans lequel ladite alimentation (40) est adaptée pour fournir une pluralité d'impulsions pour générer la différence de potentiel ΔV entre ladite au moins une électrode (26) et la pièce (12) pendant une pluralité de périodes de commande intermittente, et dans lequel ledit générateur de retard (110) est adapté pour retarder l'excitation dudit au moins un capteur à ultrasons (42) pendant le temps de maintien T_{d} après une transition de l'état d'impulsion à un état de repos.

5. Ensemble d'outil pour usinage électrochimique (10) selon la revendication 2, dans lequel ladite alimentation (40) est une alimentation continue adaptée pour appliquer la différence de potentiel ΔV entre ladite au moins une électrode (26) et la pièce (12), ledit ensemble d'outil pour usinage électrochimique comprenant en outre un dispositif de commande (120) adapté pour réduire de manière répétée la différence de potentiel ΔV appliquée entre ladite au moins une électrode et la pièce pour générer une série de périodes de mesure Δt_{M}, dans lequel ledit générateur de retard (110) est adapté pour retarder l'excitation dudit capteur à ultrasons (42) pendant le temps de maintien T_{d} après le début de l'une des périodes de mesure Δt_{M}.

6. Ensemble d'outil pour usinage électrochimique (10) selon la revendication 2, dans lequel le temps de maintien T_{d} est compris dans un intervalle d'environ sept millisecondes (7 ms) à environ 15 millisecondes (15 ms).

7. Ensemble d'outil pour usinage électrochimique (10) selon la revendication 2, dans lequel ledit générateur de retard (110) est adapté pour ajuster le temps de maintien T_{d}.

8. Ensemble d'outil pour usinage électrochimique (10) selon la revendication 2, comprenant en outre un dispositif de commande (120), ledit dispositif de commande étant adapté pour générer une pluralité de données de surveillance en analysant l'onde ultrasonore réfléchie pour déterminer au moins un paramètre parmi (a) une taille de l'espace (34) situé entre ladite électrode (26) et la pièce (12) et (b) une épaisseur de la pièce.

9. Ensemble d'outil pour usinage électrochimique (10) selon la revendication 8, dans lequel ledit dispositif de commande (120) est en outre adapté pour commander au moins un élément parmi (a) ledit moyen pour faire avancer ladite au moins une électrode (26) vers la pièce (12) et (b) ladite alimentation (40), en réponse aux données de surveillance.

10. Ensemble d'outil pour usinage électrochimique (10) selon la revendication 2, dans lequel chacun desdits au moins un capteur à ultrasons (42) comprend un transducteur à ultrasons.
